Europäisches Patentamt

European Patent Office

Office européen des brevets

(11) Publication number: 0 174 126
A2

# EUROPEAN PATENT APPLICATION

(21) Application number: 85305859.2

(22) Date of filing: 16.08.85

(51) Int. Cl.⁴: B 60 R 22/24

(30) Priority: 03.09.84 GB 8422190

(43) Date of publication of application:
12.03.86 Bulletin 86/11

(84) Designated Contracting States:
AT DE FR GB IT LU NL SE

(71) Applicant: ASE (UK) LIMITED
Norfolk Street
Carlisle Cumbria CA2 5HX(GB)

(72) Inventor: Anderson, Alexander Barrie
Westwoodside
Wigton Cumbria, CA7 0LW(GB)

(74) Representative: Jones, Ian et al,
POLLAK MERCER & TENCH High Holborn House 52-54
High Holborn
London WC1V 6RY(GB)

(54) Belt guides.

(57) For use with a vehicle seat belt guide comprising a mounting plate (5,6) secured around one side portion of an elongate running loop (1), there is provided a cover (15) having a portion which makes a snap-fit over the other portion (4) of the loop to provide a larger radius running surface to be engaged by the belt and a portion which encloses the mounting plate and makes a snap-fit therewith. The cover can provide a tongue portion (22) which restricts the area of the loop to resist folding of the belt.

FIG.1

EP 0 174 126 A2

-1-

BELT GUIDES

The invention relates to belt guides, and in particular to belt guides for use in vehicle seat belts systems.

Vehicle seat belt systems, for example those provided for use by the occupants of the front seats of a passenger car, typically comprise a retractor at the foot of the pillar between the front and rear doors from which the belt extends upwardly to a belt guide or running loop secured to the pillar above the user's shoulder. The belt reverses direction at the guide to extend downwardly either diagonally across the user's torso to a buckle connection in use or, when not in use, directly to an anchorage also located at the foot of the pillar.

According to the present invention, there is provided, for use with a belt guide of the kind having a guide portion over which the belt can extend and a mounting portion by which the guide can be secured to a support, a member arranged to fit over the guide portion so as to provide an enlarged area of belt engagement and also to provide a cover for the mounting portion.

Preferably the member is arranged to be assembled with the belt guide by being fitted onto the guide portion, with which the member can be arranged to make a snap fit, and then turned about the axis of the guide portion to the assembled portion, in which it may be secured again by making a snap fit, as with the guide mounting portion.

For use in a vehicle seat belt system, a belt guide typically comprises an elongate metal loop of which a lower straight side provides the guide portion and an upper straight side is enfolded by a metal plate for example of triangular shape. The plate is apertured to receive a bolt by which the guide is secured to the door pillar, or to another part of the vehicle frame, either directly or by way of an adjustable anchorage permitting selection of the height of the guide portion. The guide is of metal to resist the forces that the belt might impose in an emergency and thus it is preferable to make the guide loop of rod of relatively small cross-section. A large cross-section is however preferred for easy running of the belt and this can be inexpensively provided by the member of the invention, as this is conveniently integrally made in plastics material. The member of the invention can be readily manufactured and easily assembled with the belt guide, and its engagement by the belt ensures that it cannot be lost if accidentally displaced from the guide.

The member of the invention can additionally function as a cover member for at least the bolt and the securement plate, and preferably for the entire belt guide, as well as providing a slot shaped so as to oppose folding, edge waviness and bunching of the belt, which cannot readily be achieved by the metal loop itself because of the difficulties of forming the metal rod into the desired configuration.

The invention also provides a vehicle seat belt guide member comprising means defining an elongate slot for receiving a belt therethrough, the slot having a restricted control portion.

This guide member can comprise a complete unit or a belt guide and cover member assembled therewith as described above.

The invention thus provides belt guide arrangements of very advantageous form.

The invention can be more readily understood from the following illustrative description and the accompanying drawings, in which:

Figure 1 is a sectional side view of a seat belt guide assembly in accordance with the invention, in an initial stage of the assembly operation;

Figure 2 is a like view of the completed assembly; and

Figure 3 is an exploded perspective rear view of the assembly.

The illustrated guide loop assembly comprises a belt guide having a strong metal loop 1 of elongate form for receiving the belt. The loop 1 has parallel straight side portions 2,4, which extend at least approximately horizontal in use and which are integrally joined by generally semicircular end portions. A metal plate is folded around the upper straight portion 2 of the loop to have a portion 5 enclosing the adjacent ends of the circular section bar stock from which the loop 1 is made. Extending upwardly from the fold around the upper loop portion 2, the plate has a generally triangular portion 6 of double thickness of which the layers are secured together by welds.

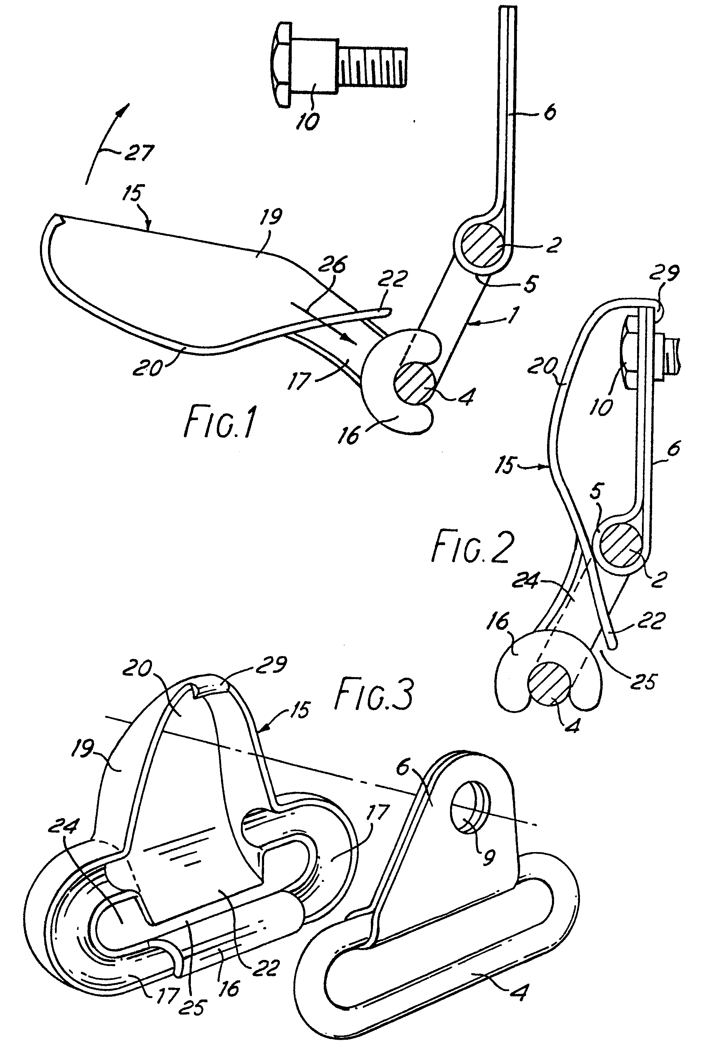

The portion 6 is provided with an aperture 9 for reception of a bolt 10 by which the assembly is secured to an anchorage provided at a suitable location in the vehicle frame. The bolt 10 can thus be received in a tapped hole provided either in the vehicle door pillar or in a carriage slidable between selected positions along an upright track secured to the pillar. The planes of the loop 1, and the plate portion 6 are inclined so that with the plate portion generally upright and adjacent the pillar, the lower loop portion 4 is spaced further away from the pillar than the loop portion 2. This spacing of the loop portion 4 away from the pillar accommodates the seat belt, which extends in use upwardly against the pillar from a retractor at its base and then outwardly through the loop 1, that is, to the left as shown in Figure 2.

The illustrated guide loop assembly as so far described functions satisfactorily on its own, with the belt extending through the loop 1, particularly if at least the lower loop portion 4 is provided with a coating to limit wear on the belt, which runs over it. In accordance with the invention, however, the loop assembly includes a member 15 which provides improvements in respect of its appearance and operation.

The member 15 can conveniently be formed of a resilient plastics material and comprises an elongate belt guide portion 16 having a smooth part-cylindrical outer surface around a longitudinal groove of part-circular cross-section dimensioned to make a snap fit over the loop portion 4 between the curved loop end portions. Extending from the ends of the portion 16 are generally semi-circular channel portions 17 which are curved to closely engage around these curved loop end portions. The channel portions 17 merge along the loop portion 2 with a central shell-like portion of the cover 15 having side walls 19 and a generally triangular front wall 20. The walls 19,20 define a volume within which the plate portions 5 and 6 and the head of the bolt 10 can be received in the assembled portion, as appears from Figure 2.

Below the loop portion 2, the cover front wall 20 has a tongue or extension portion 22 which may be resiliently flexible relative to the rest of the cover and which extends downwardly and rearwardly of the loop so as to form with the guide portion 16 a slot 24 for reception of the belt. The slot 24 resembles the slot formed within the loop 1 in being parallel sided with the sides joined by at least approximately semi-circular end portions, but has a central restriction 25 formed by the extension portion 22.

The cover 15 is assembled with the loop 1 and plate 5 after these have been installed in the vehicle by means of the bolt 10 by movement of the cover in the direction of the arrow 26 to receive the lower loop portion 4 within the groove of the portion 16. This position is shown in Figure 1. The cover 15 is then pivoted in the direction of the arrow 27 to the position of Figure 2 in which one or more inwardly projecting lips at the edge of the shell-like portion of the cover, such as the lip 29 illustrated, snap over the edge of the plate portion 6 so that the cover is releasably held in place.

In use of the illustrated guide loop assembly, the guide portion 16 provides a smooth large radius guide surface for the belt to ensure easy running and low wear. Waviness of the belt edge and bunching as the belt is extracted for use is effectively resisted by the shape of the slot 24. The cover 15 hides the head of the bolt 10 and can be provided with a decorative outer surface. The cover 15 can nevertheless be readily pivoted down if the bolt 10 needs to be tightened. Also, the engagement of the cover 15 by the belt in use prevents accidental displacement and loss. The cover 15 can be readily produced by "open and shut" moulding techniques, allowing fast, inexpensive, manufacture, and it can be easily assembled onto a belt guide or running loop already installed.

It will be understood that the invention can be readily embodied otherwise than as specifically described and shown.

CLAIMS

1. A member for assembly with a vehicle seat belt guide having a belt guide bar portion (4) and a mounting portion (6) for mounting the belt guide in a vehicle, the member (15) comprising a first portion (16) arranged to fit on the guide bar portion to provide an area of belt engagement greater than that provided by the guide bar portion and a second portion (19,20) arranged to provide at least a partial cover for the mounting portion.

2. A member as claimed in claim 1 wherein the first portion (16) is arranged to make a snap fit onto the guide bar portion (4) and/or the second portion (19,20) is arranged to make a snap fit onto the mounting portion (6).

3. A member as claimed in claim 1 or 2 wherein the member (15) is arranged to be pivotable on the belt guide about the guide bar portion (4), whereby the member can be assembled with the belt guide by fitting the first portion of the member on the guide bar portion and then pivoting the member to the assembled condition.

4. A member as claimed in claim 1, 2 or 3 wherein the first portion (16) provides a part cylindrical running surface for the belt of greater radius than the guide bar portion (4).

5. A member as claimed in claim 1, 2, 3 or 4 wherein the member has a third portion (22) providing an edge co-operating with the first portion (16) to define an elongate slot (24) for receiving a belt therethrough, the slot having a restricted central portion (25).

6. A member as claimed in claim 5 wherein the second portion (19,20) comprises a front wall (20) and side walls (19) for receiving the mounting portion (6) therein, the third portion (22) being a continuation of the front wall.

7. A member as claimed in claim 5 or 6 wherein the third portion extends to the edge thereof at an inclination to the plane of the slot.

8. A vehicle seat belt guide member comprising means (1) defining an elongate slot (24) for receiving a belt therethrough, the slot having a restricted control portion (25).

9. A member as claimed in claim 5, 6, 7 or 8 wherein the slot (24) has a first side extending between at least approximately semi-circular end portions, and a second side extending between the end portions and having a major portion projecting inwardly to an edge substantially parallel to the first side to define the restricted central portion (25).

10. A member as claimed in any one of claims 1-7 for assembly with a belt guide comprising an elongate loop (1) of which one longer side portion (4) provides the guide bar portion, and a plate (5) fixedly engaged with the other longer side portion (2) of the loop and apertured to receive a fastener (10) for mounting the guide, the second portion (19,20) of the member being arranged to cover the fastener.

0174126

FIG.1

FIG.2

FIG.3